(19) Europäisches Patentamt
European Patent Office
Office européen des brevets

(11) **EP 1 104 197 A2**

(12) **EUROPEAN PATENT APPLICATION**

(43) Date of publication:
**30.05.2001 Bulletin 2001/22**

(51) Int Cl.⁷: **H04N 7/26**

(21) Application number: **00310406.4**

(22) Date of filing: **23.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **23.11.1999 US 167364 P**

(71) Applicant: **Texas Instruments Incorporated Dallas, Texas 75251 (US)**

(72) Inventor: **Zhou, Minhua
Plano, Texas 75093 (US)**

(74) Representative: **Potter, Julian Mark
D. Young & Co.,
21 New Fetter Lane
London EC4A 1DA (GB)**

(54) **Motion compensation**

(57) Motion compensation using motion vector determination based on half-pel accuracy initial motion vector candidates followed by half-pel gradient method refinement over parallel operation units within macroblocks.

FIG. 1

**Description**

This application claims priority from provisional application Serial No 60/167,364, filed 23 November 1999. The following co-pending application assigned to the assignee of this application discloses related subject matter: Serial No _____, filed _____.

The invention relates to electronic image methods and devices and, more particularly, but not exclusively, to digital communication and storage systems with compressed images.

Video communication (television, teleconferencing, Internet, and so forth) typically transmits a stream of video frames (pictures, images) along with audio over a transmission channel for real time viewing and listening or storage. However, transmission channels frequently have limited bandwidth. Consequently, digital video transmission with compression enjoys widespread use. In particular, various standards for compression of digital video have emerged and include H.263, MPEG-1, MPEG-2, and MPEG-4.

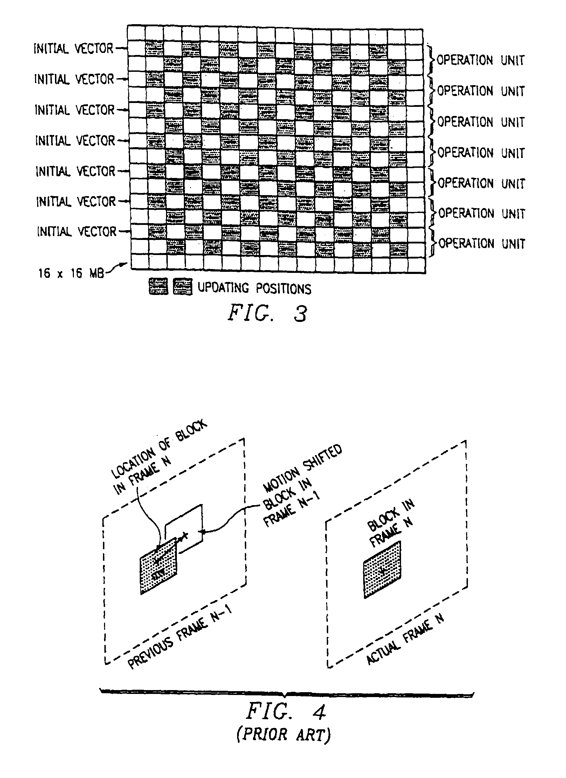

MPEG partitions a frame of pixels into macroblocks (16 x 16 blocks of pixels for luminance and two or more 8 x 8 blocks for chrominance) and employs motion compensation on a macroblock basis as illustrated in Figure 4. In particular, motion compensation predicts a macroblock's pixel values from a translate (by a motion vector) of a macroblock within a previously-decoded frame (the reference macroblock), and codes the pixel differences between the macroblock and the reference macroblock (e.g., with 8 x 8 DCT transforms). Thus only the motion vector and the (quantized) pixel differences need be coded in order to code the macroblock.

Typical approaches determine a motion vector with a two-step process: first find a motion vector with pel accuracy, and then improve to half-pel accuracy.

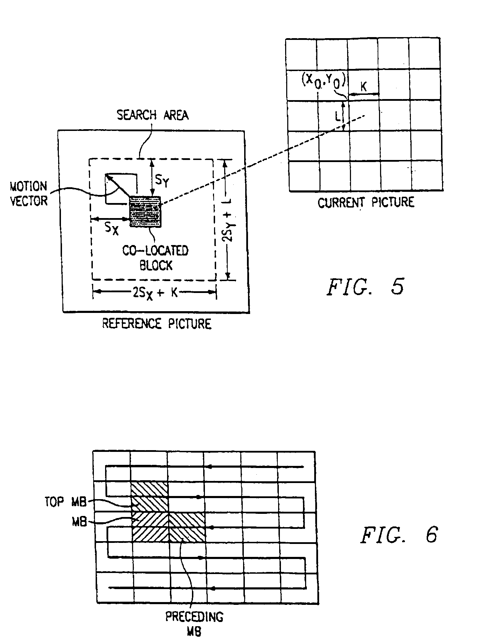

Two basic methods can generate the pel-accuracy motion vector for a macroblock: (1) block matching over a search range in the reference frame and (2) hybrid matching and gradient technique (HMGT). The block matching method just compares the sum of the absolute differences of pixels (SAD) in the 16 x 16 luminance macroblock and their counterpart pixels in a translate in the reference frame, and then selects the translate which minimizes the SAD as the motion vector. However, block matching suffers from high computational complexity because every possible 16 x 16 macroblock in the search range in the reference frame must have its SAD with the original macroblock computed; see Figure 5.

HMGT first selects an initial pel-accuracy motion vector from three candidates (see Figure 6) by block matching; next, it refines the initial motion vector using the pel-accuracy gradient technique which amounts to Newton's method; and then it selects the final pel-accuracy motion vector from the refined motion vector and the initial motion vector according to the smaller SAD with the original macroblock. This technique greatly reduces the computational complexity of motion estimation; however, it leads to a macroblock row coding delay because the motion vectors are estimated in meander scan order (Figure 6) while the coding order is from left to right and top to bottom. Indeed, the meander order provides up to 0.6 dB performance improvement over coding order.

Lastly, derive the final motion vector (having half-pel accuracy) from the pel-accuracy motion vector by forming the 8 half-pel interpolated macroblocks of the pel-accuracy motion vector's reference macroblock. The interpolations are linear using the either two or four nearest-neighbor pixels. These interpolations are considered reference macroblocks arising from translations by motion vectors with half-pel accuracy components. Then, select the final motion vector as the one of the nine candidates (the starting pel-accuracy motion vector plus the 8 half-pel component motion vectors) which yields a reference macroblock having the smallest SAD with the current macroblock. This half-pel search requires additional memory to store the interpolations.

Viewed from one aspect, the present invention provides a hybrid motion vector determination method which combines pel- and half-pel searches and avoids meander delay by initial motion vector candidate choice.

This has the advantage of lowered computational complexity.

Embodiments of the invention will now be described, by way of example only, and with reference to the accompanying drawings, schematic for clarity, in which:

Figure 1 illustrates a preferred embodiment flow.

Figure 2 shows preferred embodiment candidate vector locations.

Figure 3 indicates update pixel locations in a macroblock.

Figure 4 illustrates motion compensation.

Figure 5 shows block matching.

Figure 6 shows meander order of macroblocks.

Figures 7-9 illustrate implementations and systems.

<u>Overview</u>

The preferred embodiment video motion compensation methods simplify the motion vector estimation based on hybrid matching and gradient technique (HMGT). Candidate initial vectors have half-pel accuracy, and the gradient refinement also is in half-pel accuracy, so the pel and half-pel searches combine into a single step. Further, preferred embodiments remove the time delay by estimating motion vectors in the same order as macroblock coding rather than meander order.

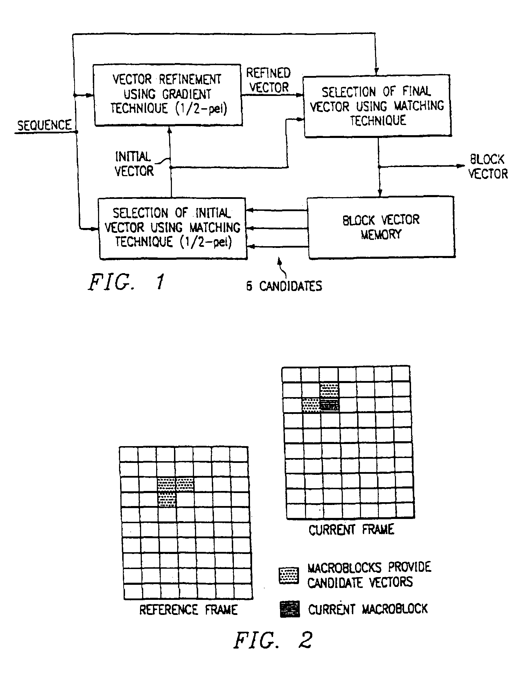

Figure 1 illustrates in block form first preferred embodiment methods of motion vector estimation for a macroblock and which includes the following three steps.

1. Selection of an initial motion vector based on block matching of six adjacent one-half-pel accuracy candidate motion vectors; see Figure 2.
2. One-half-pel accuracy refinement of the initial motion vector by gradient technique.
3. Selection of a final motion vector based on block matching and the estimated search range.

The motion vector estimation is performed macroblock by macroblock in coding order, that is, scanning from left to right and top to bottom in a frame.

Details of these steps appear in the following sections.

Preferred embodiments

Motion compensation for H.263, MPEG, and other video compression systems includes use of motion vectors for macroblocks, but provides encoder freedom to determine the motion vectors in any desired manner. That is, each (luminance) macroblock in a tiling of a (non-intra) picture typically has at least one motion vector and a corresponding residual (typically the DCT of an array of pixel differences between the macroblock and the reference (non-tiling) macroblock defined by the motion vector(s)), and the particular residual depends upon the motion vector. The magnitudes of the residuals reflects the estimation accuracy for motion vectors, and this allows for alternative motion vector determinations. The preferred embodiment motion vector determination methods are as follows.

For a current macroblock in a frame, first consider the six (half-pel accuracy) candidates for initial motion vector illustrated in Figure 2: (1) the 0 motion vector, (2) the motion vector of the top neighboring macroblock of the current macroblock (a vertical candidate), (3) the motion vector of the left neighboring macroblock of the current macroblock (a horizontal candidate), (4) the motion vector of the co-located macroblock in the reference frame (this is a first temporal candidate: the reference frame is the preceding frame), (5) the motion vector of the right neighboring macroblock in the reference frame (this is a second temporal candidate), and (6) the motion vector of the bottom neighboring macroblock in the reference frame (this is a third temporal candidate). Note that the scan order of the macroblocks in a frame implies the availability of candidates (2) and (3); whereas, candidates (4)-(6) come the prior frame. Candidates (2)-(6) are stored in the block motion vector memory which basically is a FIFO memory of depth equal to the number of motion vectors in a frame.

Select as the initial motion vector the one of the foregoing six candidate motion vectors which yields the smallest.sum of absolute differences (SAD). That is, each candidate motion vector defines a reference macroblock in the reference frame, and the corresponding SAD is the sum (over the current macroblock pixels) of the absolute difference between a pixel value in the current macroblock and the corresponding pixel value in the reference macroblock. Explicitly, denote the luminance value (integer in the range of 0 to $2^{N-1}$ for N-bit video) of the pixel at location (x,y) in frame t by f(t, x, y), and let the jth candidate motion vector be (dxj, dyj), then

$$SADj = \Sigma_{x,y} |f(t, x, y) - f'(t\text{-}1, x, y, dxj, dyj)|$$

where the sum is over the 256 pixels in the current 16 x 16 luminance macroblock which is in frame t, the reference macroblock is in frame t-1, and f'(t-1, x, y, dxj, dyj) is the (interpolated) value of the pixel in the reference macroblock corresponding to pixel (x,y) in the current macroblock. Because (dxj, dyj) has half-pel accuracy, the reference macroblock pixel values f'(t-1, x, y, dxj, dyj) may require interpolations of the actual pixel values f(t-1, x, y) in the reference frame. In particular, define the interpolated pixel value f'(t-1, x, y, dxj, dyj) as follows:

(a) if dxj%2 = 0 and dyj%2 = 0 (where % is the modulus operator, so both components dxj and dyj are integral and not half-integral), then

$$f'(t\text{-}1, x, y, dxj, dyj) = f(t\text{-}1, x+dxj, y+dyj)$$

(b) if dxj%2 = 1 and dyj%2 = 0 (that is, dxj is half-integral and dyj is integral), then

$$f'(t-1, x, y, dxj, dyj) = \{f(t-1, x+[dxj], y+dyj) + f(t-1, x+[dxj]+1, y+dyj) + 1\}/2$$

where [..] is the integral part, so in this case dxj = [dxj] + 1/2. The addition of 1 to the sum of the two fs provides round off in the sense that for integers /2 is division by 2 with discard of the remainder.
(c) if dxj%2 = 0 and dyj%2 = 1 (dxj is integral and dyj is half-integral), then

$$f'(t-1, x, y, dxj, dyj) = \{f(t-1, x+dxj, y+[dyj]) + f(t-1, x+dxj, y+[dyj]+1) + 1\}/2$$

(d) if dxj%2 = 1 and dyj%2 = 1 (dxj and dyj are both half-integral), then

$$f(t-1, x, y, dxj, dyj) = \{f(t-1, x+[dxj], y+[dyj]) + f(t-1, x+[dxj]+1, y+[dyj]) +$$

$$f(t-1, x+[dxj], y+[dyj]+1) + f(t-1, x+[dxj]+1, y+[dyj]+1) + 2\}/4$$

where the addition of 2 to the sum of the four fs provides round off in the sense that for integers /4 is division by 4 with discard of the remainder.

If a candidate motion vector is not available or points outside of the reference frame when placed at the current macroblock position, this motion vector is disregarded during the selection of the initial motion vector.
And in order to favor the 0 motion vector candidate (candidate (1)), an offset of -128 is added to the SAD for the 0 motion vector; this averages to only -1/2 per pixel.
After selection of the initial motion vector as the candidate motion vector yielding the smallest SAD, refine the initial motion vector using the gradient technique as follows. First partition the current 16 x 16 luminance macroblock into seven operation units, each of the units containing 16 x 2 pixels as illustrated in Figure 3 and operating independently. In each unit the updating begins with the initial motion vector, denoted by $(dx_0, dy_0)$, and runs over a sub-sampling of pixels with an updating spacing of two pixels. The updating order in each unit consists of left to right in the first pixel row and from right to left in the second pixel row; Figure 3 shows the update pixels as shaded and the direction to the next update pixel by an arrow. At each update pixel both the temporal gradient and the spatial gradient are computed and the motion vector is updated according to:

$$dx_{n+1} = dx_n + DPD/grad\_x$$

$$dy_{n+1} = dy_n + DPD/grad\_y$$

where the temporal gradient DPD (displaced pixel difference) is defined as:

$$DPD(dx_n, dy_n, x, y) = f(t, x, y) - f'(t-1, x, y, dx_n, dy_n)$$

and the spatial gradient (grad_x, grad_y) is defined as:

$$grad\_x = [f(t, x+1, y) - f(t, x-1, y)]/2$$

$$grad\_y = [f(t, x, y+1) - f(t, x, y-1)]/2$$

The quotient of the temporal gradient divided by the spatial gradient is rounded off to a half-integer value. Note that this refinement process is essentially Newton's method in that DPD is the pixel value difference and grad_x and grad_y are the derivatives, so the quotient is the best linear approximation for x and y adjustments to make the pixel value difference vanish. At update pixels where grad_x and/or grad_y equals 0, the corresponding updating is skipped and the motion vector repeated.
In the event that an updating produces a motion vector with DPD equal to the currently smallest DPD, then replace current smallest with the updated motion vector. In the particular case that DPD at an updating position equals 0, the motion vector at that position is taken as the final refined motion vector, the half-pel vector refinement is terminated and no further updating is performed.

Lastly, select as the refined motion vector, $(dx_R, dy_R)$, for the current macroblock the updated motion vector with the smallest DPD. There are at most 7 x 14 (=98) updatings, and each updating computes the DPD for the current motion vector. Thus tracking the smallest DPD requires only a single motion vector be stored, or if the updating proceeds through the seven operating units in parallel only seven motion vectors need be stored. Of course, the last updated motion vector in each operating unit needs a separate DPD computation.

Once the refined motion vector $(dx_R, dy_R)$ has been determined, compute the SAD for the refined motion vector and compare it to the SAD of the initial motion vector $(dx_o, dy_o)$. If the refined motion vector is in the allowed search range ($-16 < dx_R, dy_R \leq 15.5$), then select as the final motion vector for the current macroblock the one of the initial motion vector and the refined motion vector which has the smaller SAD. If the refined motion vector is not in the allowed search range, then take the initial motion vector as the final motion vector for the current macroblock. Of course, the motion vector determines the reference macroblock, and the 16 x 16 difference between the current macroblock and the reference macroblock then becomes the residual to be coded (i.e., by DCT on 8 x 8 blocks followed by quantization of coefficients).

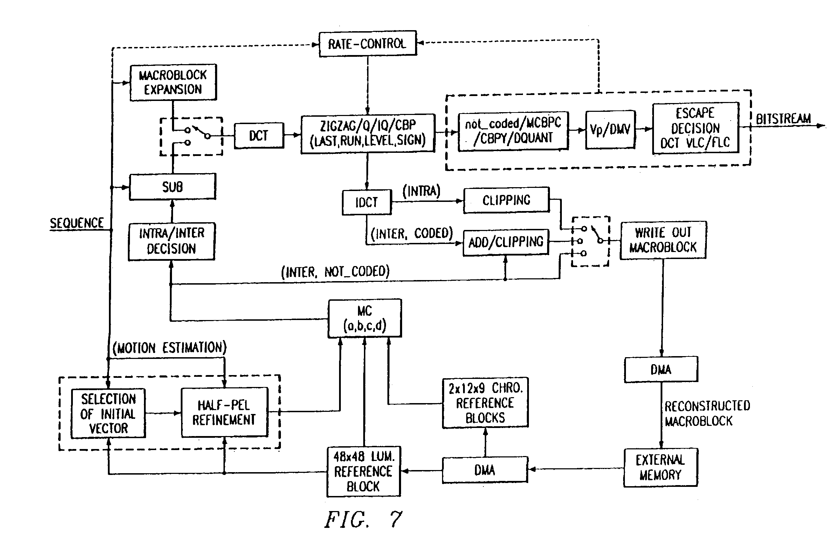

The foregoing method to find a motion vector for a macroblock reduces the computational complexity by a factor of about 120 compared to the full search block matching when using the search range $-16 \leq dx, dy \leq 15.5$. The method can be used in H.263 compression in real time as for videoconferencing on a TMS320C6x type DSP when using a look up table for the division in the motion vector refinement. Figure 7 illustrates an implementation in functional block format; the function blocks for encoding picture header and Group Of Blocks header are not shown. The trade off in quality is a loss of about 0.3-0.6 dB.

## System preferred embodiments

Figure 9 illustrates in block diagram a preferred embodiment video-telephony (teleconferencing) system which transmits both speech and an image of the speaker using one of the foregoing preferred embodiment image compressions encoding and decoding. Of course, Figure 9 shows only transmission in one direction and to only one receiver; in practice a second camera and second receiver would be used for transmission in the opposite direction and a third or more receivers and transmitters could be connected into the system. The video and speech are separately compressed and the allocation of transmission channel bandwidth between video and speech may be dynamically adjusted depending upon the situation. The demand for minimal delay during communication sessions with packetized transmission (e.g., Internet) implies significant costs for delays in coding, transmission, and decoding. And the preferred embodiment motion vectors decreases coding and decoding delays.

The video camera may be a CCD camera with an in-camera analog-to-digital converter so that the output to compressor 208 is a sequence of digital frames as generally illustrated in Figure 2; alternatively, analog cameras with additional hardware may be used to generate the digital video stream of frames. The video compression may be hardwired or, more conveniently, be programmed in a (programmable) digital signal processor (DSP) with the compression steps stored in onboard memory, RAM or ROM or both. For example, a TMS320C5xx or TMS320C6x type DSP may suffice. Also, for a teleconferencing system as shown in Figure 6, error correction with real time reception may be included and implemented on general purpose processors.

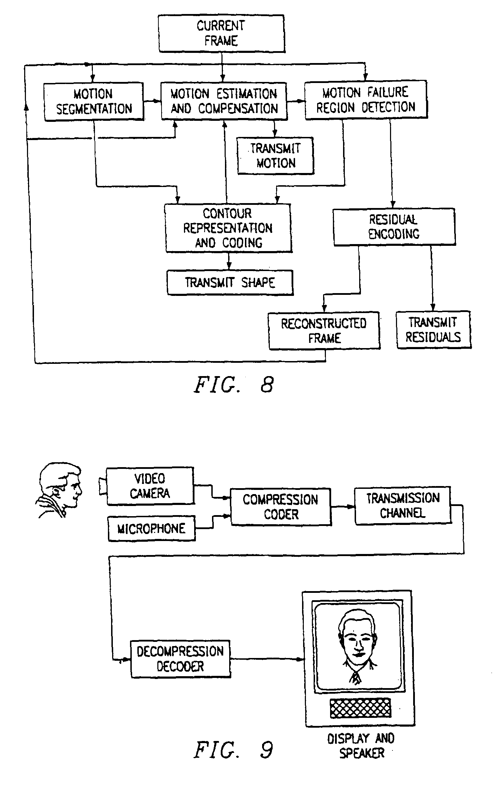

Figure 8 shows a high level flow diagram for the preferred embodiment video compression methods which include the following steps for an input consisting of a sequence of frames, F0, F1, F2, ...., with each frame 144 rows of 176 pixels or 288 rows of 352 pixels and with a frame rate of 10 frames per second. Frames of these two sizes partition into arrays of 9 rows of 11 macroblocks with each macroblock being 16 pixels by 16 pixels or 18 rows of 22 macroblocks. The frames will be encoded as I pictures or P pictures; B pictures with their backward interpolation would create overly large time delays for very low bitrate transmission. An I picture occurs only once every 5 or 10 seconds, and the majority of frames are P pictures. For the 144 rows of 176 pixels size frames, roughly an I picture will be encoded with 20 Kbits and a P picture with 2 Kbits, so the overall bitrate will be roughly 22 Kbps (only 10 frames per second or less). The frames may be monochrome or color with the color given by an intensity frame (Y signal) plus one quarter resolution (subsampled) color combination frames (U and V signals).

## Modifications

The preferred embodiments may be varied in many ways while retaining one or more of their features of motion vector determination with an initial search (at half-pel accuracy) of candidate motion vectors for scan order encoding plus gradient method updating (at half-pel accuracy) over operation units within the (macro)block with common initial motion vectors for refinement.

For example, the video compression method (MPEG, H.263, etc.) with corresponding adjustments in the type of motion vectors required, the size of the images or frames, the shape of the blocks used for translation and matching and the search extent, the quantization levels, symbols, and so forth can be varied. Fewer or more initial motion vector candidates could be used, and the number and size of the operation units for refinement updating could be varied.

Insofar as embodiments of the invention described above are implementable, at least in part, using a software-controlled programmable processing device such as a Digital Signal Processor, microprocessor, other processing devices, data processing apparatus or computer system, it will be appreciated that a computer program for configuring a programmable device, apparatus or system to implement the foregoing described methods is envisaged as an aspect of the present invention. The computer program may be embodied as source code and undergo compilation for implementation on a processing device, apparatus or system, or may be embodied as object code, for example. The skilled person would readily understand that the term computer in its most general sense encompasses programmable devices such as referred to above, and data processing apparatus and computer systems.

Suitably, the computer program is stored on a carrier medium in machine or device readable form, for example in solid-state memory or magnetic memory such as disc or tape and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

**Claims**

**1.** A method of motion vector determination, comprising the steps of:

(a) selecting a first initial motion vector from a set of candidate initial motion vectors for a first block of pixels in an array of pixels;
(b) refining said first initial motion vector separately through at least two sequences of pixels in said first block;
(c) selecting a first motion vector for said first block from said first initial motion vector and refinements from foregoing step (b); and
(d) repeating foregoing steps (a)-(c) for each of second, third, ..., and Nth blocks in said array wherein said blocks are in scan order.

**2.** The method of claim 1, wherein:

(a) said block of pixels is a 16 x 16 macroblock; and
(b) said selecting is based on sums of absolute differences.

**3.** A method of video communication, comprising the steps of:
(a) transmitting motion compensated video images with motion vectors for blocks of pixels in an image determined by

(i) selecting a first initial motion vector from a set of candidate initial motion vectors for a first block of pixels in an image;
(ii) refining said first initial motion vector separately through at least two sequences of pixels in said first block;
(iii) selecting a first motion vector for said first block from said first initial motion vector and refinements from foregoing step (b); and
(iv) repeating foregoing steps (a)-(c) for each of second, third, ..., and Nth blocks in said image wherein said blocks are in scan order.

**4.** A video encoder configured to perform any one of the methods of claims 1, 2 or 3.

**5.** A computer program comprising computer- or machine-readable computer program elements for configuring a computer to implement the method of any one of claims 1 to 3.

6. A computer program comprising computer- or machine-readable computer program elements translatable for configuring a computer to implement the method of any one of claims 1 to 3.

7. A carrier medium carrying a computer program according to claim 5 or 6.

FIG. 1

SEQUENCE

VECTOR REFINEMENT USING GRADIENT TECHNIQUE (1/2-pel)

REFINED VECTOR

SELECTION OF FINAL VECTOR USING MATCHING TECHNIQUE

INITIAL VECTOR

SELECTION OF INITIAL VECTOR USING MATCHING TECHNIQUE (1/2-pel)

BLOCK VECTOR MEMORY

BLOCK VECTOR

6 CANDIDATES

CURRENT FRAME

REFERENCE FRAME

MACROBLOCKS PROVIDE CANDIDATE VECTORS

CURRENT MACROBLOCK

FIG. 2

INITIAL VECTOR
INITIAL VECTOR
INITIAL VECTOR
INITIAL VECTOR
INITIAL VECTOR
INITIAL VECTOR
INITIAL VECTOR

OPERATION UNIT
OPERATION UNIT
OPERATION UNIT
OPERATION UNIT
OPERATION UNIT
OPERATION UNIT
OPERATION UNIT

16 x 16 MB

UPDATING POSITIONS

FIG. 3

LOCATION OF BLOCK IN FRAME N

MOTION SHIFTED BLOCK IN FRAME N-1

PREVIOUS FRAME N-1

BLOCK IN FRAME N

ACTUAL FRAME N

FIG. 4
(PRIOR ART)

SEARCH AREA

MOTION
VECTOR

$S_Y$

$S_X$

CO-LOCATED
BLOCK

$2S_X + K$

$2S_Y + L$

REFERENCE PICTURE

$(X_0, Y_0)$   K

L

CURRENT PICTURE

FIG. 5

TOP MB

MB

PRECEDING
MB

FIG. 6

FIG. 7

FIG. 8

FIG. 9